Europäisches Patentamt

European Patent Office

Office européen des brevets

(11) Publication number: **0 196 317**
**B1**

## EUROPEAN PATENT SPECIFICATION

(45) Date of publication of patent specification: **07.03.90**

(21) Application number: **85904753.2**

(22) Date of filing: **16.09.85**

(86) International application number:
**PCT/US85/01781**

(87) International publication number:
**WO 86/01841 27.03.86 Gazette 86/07**

(51) Int. Cl.⁵: **D 01 D 5/00, D 01 F 1/10, H 01 M 2/16, C 25 B 13/04**

(54) NON-ORGANIC/POLYMER FIBER COMPOSITE, METHOD OF MAKING SAME AND USE INCLUDING DIMENSIONALLY STABLE SEPARATOR.

(30) Priority: **17.09.84 US 651247**
**17.09.84 US 651248**
**17.09.84 US 651613**

(43) Date of publication of application:
**08.10.86 Bulletin 86/41**

(45) Publication of the grant of the patent:
**07.03.90 Bulletin 90/10**

(84) Designated Contracting States:
**BE DE FR GB IT NL SE**

(56) References cited:
**EP-A-0 037 140**
**DE-B-1 047 986**
**FR-A-2 158 007**
**GB-A-1 082 859**
**GB-A-1 316 661**
**US-A-4 036 729**
**US-A-4 126 536**
**US-A-4 168 221**
**US-A-4 253 935**

(73) Proprietor: **ELTECH SYSTEMS CORPORATION Town Executive Center 6100 Glades Road Suite 305 Boca Raton Florida 33434 (US)**

(72) Inventor: **HRUSKA, Louis, W. 4366 North Broadway Geneva, OH 44041 (US)**
Inventor: **BROWN, Carl, W., Jr. 505 Monroe Boulevard Painesville, OH 44077 (US)**
Inventor: **GRAHAM, Christopher, E. 356 Fairgrounds Road Painesville, OH 44077 (US)**

(74) Representative: **Cronin, Brian Harold John c/o DST SA 9, Route de Troinex CH-1227 Carouge/GE (CH)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# EP 0 196 317 B1

**Description**

## Background of the Invention

The use of chemically resistant fibers to form complex shapes or act as reinforcement has long been known. In the art, there are known organic polymer fibers such as extruded polytetrafluoroethylene fibers, inorganic fibers such as carbon fibers, naturally occurring fibers such as spun cotton, and mixes of ceramics and fibers (floor tile). Also, there are materials made of mixes of inorganic fibers and organic polymer fibers, where the organic polymer fibers act as a "glue" to hold the inorganic fibers together. For instance, some literature shows an inorganic fibers such as potassium titanate or zirconia used together with polytetrafluoroethylene as a "glue" in the manufacture of sheets, filters, or other finished products. However, this art merely shows the materials used with each other, but not formed into an inorganic-polymer composite fiber as in the instant invention.

A specific example of this art is Canadian Patent 834,895, which discloses a battery separator made of potassium titanate as the inorganic material used with polytetrafluoroethylene as the organic material. Another example of this art is U.S. Patent 3,713,890, which discloses a battery separator made of zirconia as the inorganic material used with polytetrafluoroethylene as the organic material. In addition, an article entitled "New Separators for Nickel-Cadmium Cells" in the Journal, *Proc. of the Intersociety Energy Conversion Conference*, 16th, XI, (1981), discloses a battery separator of Zircar™ (zirconia fabric number ZYW15™ manufactured by Zircar Products, Inc.) reinforced with polytetrafluoroethylene.

Also, it has been known to take an isotropic carbon fiber and press it together with polytetrafluoroethylene for use as artificial tendons in human bodies, as disclosed in U.S. Patent 3,992,725. This patent also discloses that zirconia fiber may be employed instead of carbon fiber.

Also known in the prior art are gaskets and bearings commonly made by molding a blend of inorganic fiber and polymer powder. Typical compositions include 40—80% polymer blends of inorganic and powdered polymer. These blends are compressed and heated to form the final product. The blend precursors are less than 100 microns in diameter, although they may be preblended into larger particles before molding.

In all of these prior art examples, the mixture of polymer and inorganic does not exhibit any non-uniform fiber morphology. According to the prior art, the concurrent use of a polymer and an inorganic does not require the formation of any non-isotropic intermediate, composite fibers. In other words, a composite fiber is not formed, but rather the polymer is simply used "to glue" the inorganic fiber together.

A large number of the electrolytic cells now in existence employ diaphragms. Many of the cells used in the production of chlorine and caustic by the electrolysis of brine are diaphragm type cells. In general, these diaphragms are formed by deposition directly on a foraminous cathode. In the past, the deposition was from a slurry of asbestos fibers. Such asbestos diaphragms have the serious disadvantage that in operation the asbestos swells considerably, e.g., up to 800 percent, filling the anode-cathode gap and thus increasing cell voltage and subjecting the diaphragm itself to attrition by gas released at the now proximate anode surface.

One variation to alleviate swelling of a conventional asbestos diaphragm for electrolytic cells for chlorine and caustic production was to make the diaphragm from asbestos together with a polymer, particularly a fluorine-containing polymer. See for instance, U.S. Patent 4,410,411 (Fenn et al) and U.S. Patent 4,070,257 (Motani et al). Related art, U.S. Patent 3,723,264 (Leduc et al) and U.S. Patent 3,694,281 (Leduc et al) disclose asbestos-polymer diaphragms for electrolytic cells for olefin production.

Also, some background art shows zirconia-modified asbestos diaphragms, such as U.S. 4,354,900 (Hruska et al). In this patent zirconia is added as a solution or powder merely as a modifier of the asbestos fiber and thus the diaphragm is not made of a composite fiber, but rather a mixture of the asbestos fiber and polymer modifier.

It has also been proposed to incorporate extremely finely divided particles into molten thermoplastics. The resulting thermoplastics can then be shaped. For example, U.S. Patent 4,126,536 discusses the addition of sub-micron-sized particles, such as of titanium dioxide to such a molten substance. In shaping, the resultant material can be extruded through a die and the extrudate broken into fibers useful for preparing diaphragms. However, the resulting product has the particles incorporated in the fiber, i.e., encapsulated therein; thereby losing the surface character of the fine particles within the polymer.

General background art includes a modification of Teflon™ felt diaphragm with zirconia/magnesia for use in an electrolytic cell for chlorine and alkali metal hydroxide production. This is represented by U.S. Patent 4,253,935. But like other background art, this patent does not make any composite fiber diaphragm, but rather uses an inorganic to coat the polymer.

Lastly, GB—A—1 316 661 (TOMOJI MURATA) discloses fibrous reinforcing materials for cement consisting of two-phase fibers made of a thermoplastic synthetic resin containing dispersed cementatious materials. These fibers are made by melting the resin and spinning into fibers which are cut to length, or extruded into a film which is drawn and split into fibers.

## Summary of the Invention

It has now been discovered that an improved non-organic-polymer composite fiber can be made which can take advantage of the non-organic particles surface characteristics. The composite fiber comprises a non-organic particulate material and an organic polymer.

2

In one preferred combination for chemical resistance, the non-organic material is a very finely-divided valve metal oxide and the organic polymer is a fluorine-containing polymer. The composite fiber is often a dry, free-flowing particulate, most often of a color or hue attributed to the non-organic component. Each discrete fiber can be branched, but need not be, and may sometimes have a tree-shaped appearance with the non-organic particulate firmly bound in the polymer.

The present invention in a broad aspect pertains to a fiber composite comprising fibers of an organic polymer having finely-divided non-organic refractory particulate bound firmly with said polymer at least substantially within the surface thereof so as to be resistant to physical separation from the fibers without fiber destruction, characterised in that the fibers are fibrillated non-isotropic fibers having a non-uniform morphology, at least some of the fibers being branched.

Also, the present invention provides for a method of making an inorganic-polymer fiber, which method comprises:

(1) combining non-organic particulates and organic precursor particles for said polymer fiber;

(2) bringing the combination of particulate and particles to an elevated temperature sufficient for the organic polymer to soften and flow under pressure but insufficient for substantial decomposition of the polymer; and

(3) vigorously grinding or shearing the combination at such elevated temperature for a time sufficient to allow the softened organic precursor particles to flow under grinding or shearing pressure and fibrillate in the presence of the particulates, thereby firmly binding such particulates with the softened polymer during fiber formation.

Due to the nature of the non-organic and of the polymer, the fiber can exhibit desirable stability. In one aspect, the fiber of the present invention may be useful in making a dimensionally stable diaphragm for a chlor-alkali cell. The composite fibers of the instant invention can not only be hydrophilic and flexible, but they may also be desirably chemically resistant. Furthermore, the composite fibers can have cost advantage, e.g., on a comparative weight basis, when contrasted with certain organic polymers. Moreover, although such may be made with magnesium silicate or the like as the inorganic, it is not necessary to employ such a material, e.g., asbestos, thus, avoiding the recognized health hazards attendant the use of an asbestos fiber.

The invention also provides an inorganic-polymer composite fiber separator, preferably a diaphragm for use in an electrolytic cell, particularly an electrolytic cell for chlorine and caustic production. The diaphragm is not only substantially chemical-attack resistant in the environment of a diaphragm cell but also is resistant to changes in operating conditions because it can provide for reduced swelling, as in comparison with the polymer-modified asbestos diaphragm. Thus, it has a long life. Moreover, since the present diaphragm does not employ free asbestos, there is obviated the well known health hazard to those workers involved with asbestos. The diaphragm of the present invention could utilize some asbestos as an inorganic, but it is preferred to use an asbestos-free formulation.

In this aspect, the present invention provides a porous and dimensionally stable separator comprising a heat-induced fused interconnection of non-isotropic composite fibers in a matted form having inorganic particulates embedded in a polymer fiber surface, the individual fibers before matting being as discussed above.

The present invention also provides a method of providing a hydraulically permeable, dimensionally stable diaphragm on a substrate, said diaphragm being for use in an electrolytic cell, which method comprises:

(a) forming a slurry or paste of the non-isotropic, organic and inorganic composite fibers as set out above;

(b) depositing, by means of a pressure differential, said slurry or paste as a uniform mixture of said inorganic/polymer composite fibers onto a substrate;

(c) subjecting the deposit to a temperature sufficient and for a time sufficient to allow the composite fibers to fuse together thereby forming a mechanically stable, permeable mat; and

(d) cooling to substantially room temperature, whereby there is obtained a diaphragm dimensionally stable under operating cell conditions.

The present invention also provides for making the diaphragm as described in the above paragraph wherein the substrate comprises a foraminous cathode and the depositing comprises inserting the cathode to be coated into the slurry or paste and depositing a uniform mixture of the composite fibers thereon by means of a pressure differential.

This allows the application of a superior asbestos-free diaphragm directly on the cathode of a conventional chlor-alkali cell that would typically employ an asbestos diaphragm. No new cell design or redesign is required. As compared to a conventional asbestos diaphragm and its use in a chlor-alkali cell, the dimensionally stable diaphragm-free inorganic-polymer diaphragms of the present invention provide a number of other advantages not specifically enumerated hereinabove. (1) Such diaphragms are found to enjoy a longer useful life without replacement. (2) Assembly, disassembly, and reassembly of the cell is facilitated since the heat treatment apparently hardens and strengthens the diaphragm, thus rendering it less susceptible to damage. (3) The swelling ordinarily encountered with a conventional prior art asbestos diaphragm (up to 800 percent) and prior art polymer-modified diaphragm of around 25 percent of the original diaphragm thickness can be very deleterious. The instant diaphragm exhibits substantially no swelling under operating conditions. Because of this, it is now possible to reduce further the anode-diaphragm gap, and hence further lower the cell voltage, by mechanical means such as the "expandable" anodes described in U.S. Patent 3,674,676. (4) The present diaphragms readily lend themselves to removal of impurities by an acid wash without diaphragm degradation. (5) The diaphragms of the present invention do not appear as susceptible to damage by the unavoidable current fluctuations experienced during extended periods of in-plant operation.

Other aspects of the present invention further include compressed bodies of composite fibers, e.g., serving as filters, for instance as a filter packing material for column chromatography, or which may be compressed and sintered, thereby being useful as bearing and gaskets, as well as including reinforced elastomeric materials having composite fiber reinforcement in an elastomeric matrix.

Description of the Preferred Embodiments

Composite Fiber Materials and Precursors

In general, the non-organic particulate employed can be any such substance or mixture of substances which is refractory, i.e., will retain particulate integrity under the physical conditions of composite fiber formation, while being inert to the polymer fiber substrate. By being inert, the non-organic will be a substance capable of being physically bound to the polymer in processing without chemically reacting with such polymer. Depending generally on the use of the composite fiber product, the non-organic may be pure or contain impurities, can be natural or synthetic, can be elemental or elements in combined form, may be hydrated or the like and change in processing, e.g., lose water of hydration, may be employed in one or more crystalline forms, and can be extremely hard, such as zirconia, or less so, as represented by talc. Suitable non-organic substances may be oxides, carbides, borides, silicides, sulfides, nitrides or mixtures of these substances. Also, the instant invention may suitably employ as the non-organic, silicates, e.g., magnesium silicates and alumino-silicates, aluminates, ceramics, cermets, carbon or mixtures thereof. Complex substances can be serviceable and may be natural, e.g., talc, or synthetic, such as the metal oxides disclosed in U.S. Patent 4,419,278. It is also contemplated to use particulate metals and alloys as well as mixtures, including, for example, mixtures of metals and metal oxides. For most applications of the composite fiber, it is preferred to use a valve metal oxide or a mixture of such oxides. More particularly, the valve metals for these oxides are meant to include titanium, vanadium, chromium, zirconium, niobium, molybdenum, hafnium, tantalum and tungsten. Oxides of other metals that have related characteristics, such as oxides of Al, can also be most useful. Oxides of other elements that border on the periodic chart to the valve metals, such as oxides of Si, also may be most suitably employed. Especially preferred is zirconia as the non-organic for making the non-organic-polymer composite fibers owing to its inert properties, e.g., inert to chemical reaction in a pH range such as from 2 to 14 with the chemicals of a chlor-alkali cell.

Referring most particularly to this non-organic zirconia, also known as zirconium oxide, as a representative example, it occurs in nature as the mineral baddeleyite. The common particulate form of zirconia is a heavy, white, amorphous powder, but it may also occur as crystals, fused aggregates or whiskers. All such particulates can be employed. Zirconia occurs in nature with impurities, and may, for instance, contain some zircon ($ZrSiO_4$) or some hafnium (Hf). In general, naturally occurring materials such as zirconia are suitable with or without the impurities, or there may be used as blends, e.g., blends of zirconia and hafnium. Titania ($TiO_2$) is another inorganic especially useful for its inert properties. It is representative of an inorganic of different crystalline forms and both the rutile or anatase form are acceptable, or mixture thereof. It is most advantageous that if the desired end use of the composite fiber will subject such composite to the harsh conditions of strong acids or strong bases, then substantially pure zirconia will be used.

With regard to the non-organic employed, in general any particulate form or finely-divided size or size distribution can be useful. The non-organic may be small fragments and these are virtually always very finely divided, e.g., generally all more finely divided than about 100 mesh (about 150 microns) and most usually all more finely divided than about 400 mesh (36 microns), thus providing finely-divided, "micron-sized" particulates. However, sub-micron-sized particulates, which have at least substantially all particles finer than one micron, must be used with caution so as to avoid substantial to virtually complete particle encapsulation in the fiber composite during fiber formation. Such gross encapsulation diminishes the benefit which may be derived from particulates at the surface of the fibers. Thus, sub-micron-sized particulates are preferably avoided, or are blended with micron-sized particulates before or in use. Generally, when used herein, "micron-sized" means very finely-divided particulates more coarse than the sub-micron-sized particulates, but nonetheless having a major weight portion, i.e., greater than 50 weight percent, more finely-divided than about 100 mesh (about 150 microns). Mesh as used herein is U.S. Sieve Series. Representative particles can be selected from granules, powders, flakes, aggregates including aggregated powders, fibers, whiskers, crystals and their mixtures. Referring for exemplary purposes to the preferred non-organic zirconia, it will often be employed as a micron-sized particulate, e.g., powder having an average particle size of from 1 to 16 microns, and more typically will be of average particle size from about 5 to 12 microns. Often, many particulates will be sufficiently finely-divided so as to be encapsulated in the fiber but will be only superficially embedded owing to the composite fiber formation conditions, such as temperature and length of formation time.

The useful polymer precursor of the composite fibers is generally any polymer, copolymer, graft polymer or combination thereof which is suitable for being chemically and mechanically resistant to the operating conditions in which the composite fiber will be employed. As an example, chemically resistant for use in a chlor-alkali cell is meant resistant to degradation with respect to the cell chemicals, e.g., caustic. By mechanically resistant for such example, the polymer should be selected so that the composite can maintain a high modulus, i.e., be resistant to inelastic deformation at above normal temperature, e.g., at temperatures up to 100°C or more, such as up to about 250°C for polytetrafluoroethyene (hereinafter generally referred to as PTFE polymer). The polymer precursor of the composite polymeric-inorganic fiber will be used in particulate form, and it is contemplated that it will always include particles such as powders, aggregates and agglomerates including powder agglomerates which may be found in particle dispersions and particularly colloidal dispersions being especially serviceable, with the useful particles further including granules, chunky-bodied particulates, fibers and also including mixtures, such as mixtures of fibers and granules. When using fibers, it is preferred to use short, chunky fibers or a mixture including such fibers. As the term is used herein, "chunky fibers" typically have a length to diameter ratio not substantially in excess of about 100/1 or so, with many fibers preferably being much less, e.g., having such a ratio on the order of 10/1 to 20/1, thereby permitting greater ease for the fiber to "grow" in composite preparation, as will be more particularly discussed hereinbelow. For convenience, all of these polymer particulates may simply be referred to herein as the "precursor particles" for the polymer fiber. Typically, dispersions of pulverulent polymer are used and preferably for ease of composite fiber production, these particles of the dispersion will have finely-divided character such that their size range is between about 0.05 to 200 microns in diameter. For example, commercially available particulate PTFE polymer dispersions can be obtained which have polymer particles having diameters ranging up to about 0.5 micron. Such dispersions are described for example, in U.S. Patent No. 4,047,537. These dispersions in a most advantageous form have submicron sized particles. The dispersions are hydrophilic, negatively charged colloid dispersions, containing particles having diameters preferably of about 0.05 micron to about 0.5 micron, suspended in water. However, when used in liquid media, it is acceptable that the polymer may also be partially solubilized or swollen as well as dispersed by such liquid or liquid blend. Another useful and exemplary commercially available product is a fluoropolymer powder agglomerate. Powder agglomerates of commercial PTFE polymer powder, can have average particle size for the agglomerates, ranging typically between about 0.1 and 100 microns.

It is also contemplated that the polymeric fiber precursors may be mixtures of various polymer particles, e.g., mixtures of fibers, fibrids and granules, as well as to use mixtures of particulate components, e.g., granules, fibrids and fibers of different sizes, lengths, and compositions. The terms fibrid and fibril as used herein have substantially the same meaning to indicate that shearing action has been employed in their preparation. When mixtures are used, the majority by weight of such mixtures will preferably include the particles of granular form, i.e., granules, powders, or chunky-bodied form, including the aggregates and agglomerates. Hence the fiber and fibrid particulates will usually be in minor amount in the mixture.

As the useful polymers, particularly advantageous are the halogen-containing polymers which include fluorine, e.g., fluorine-containing or fluorine- and chlorine-containing polymers, such as polyvinyl fluoride, polyvinylidene fluoride, PTFE polymer, polyperfluoroethylene propylene, polyfluoroalkoxyethylene (herein often referred to as PFA polymer); polychlorotrifluoroethylene (herein generally referred to as PCTFE polymer), and the copolymer of chlorotrifluoroethylene and ethylene (herein usually referred to as CTFE polymer). Also, useful are various acrylics, which can be serviceable as aqueous as well as non-aqueous dispersions, such as polymethylmethacrylate; phenolics, such as phenolformaldehyde; polyethylene; polystyrene; acrylonitrile-vinyl chloride copolymers; polyvinylidene chloride; polyvinyl chloride; chlorinated polyvinyl chloride; polyesters; polyimides; polymercaptans; polysulfones; and polyolefins. Most preferably for chemical and mechanical stability the fluoro-polymer is selected from PTFE polymer PCTFE polymer, CTFE polymer, or PFA polymer. PFA polymer is also known as the copolymer of tetrafluoroethylene and perfluorinated vinyl ether. The most preferred polymer for a most chemically resistant composite is a PTFE polymer.

It is most advantageous that the polymer be used in its relatively untreated or unadulterated form, e.g., usually the form most readily commercially available without being upgraded as by being chemically altered for special use. It is understood that dispersion forms may contain added ingredients, such as surfactants, but for economy it is usually advantageous to avoid further processed polymer. Thus, for economy, the polymer particles have preferably not been chemically treated, e.g., sized or dyed or otherwise colored or pigmented, and need not be highly physically processed, e.g., abraded or the like. It is however contemplated that such upgraded polymer particles may be useful, although not preferred, and that there may be used with the polymer various additives and the like, as is more particularly discussed hereinbelow.

Composite Fibers and Their Preparation

Although simple dry mixtures can be successfully processed to prepare suitable fiber composites, a liquid medium may also be employed. A liquid medium that can be useful in composite preparation is usually aqueous. This may be only water. Typically, the liquid medium is provided by a commercially available polymer dispersion, such as have been mentioned hereinabove. It is contemplated that the suitable liquid media will include a great variety of organic vehicles, including alcohols, hydrocarbons, and halocarbon oils, as well as blends of liquids, e.g., water and alcohol. Thus, as an example, non-aqueous acrylic polymer dispersions can be serviceable as well as the aqueous dispersions.

In general, any amount of polymer employed will be sufficient so long as it links the inorganic particulates into an inorganic polymer composite fiber. This amount will vary with the identity of the polymer used and also with its physical form. The amount of polymer used can also vary with the type and size of the inorganic used as well as the desired service for the composite fiber product. Generally, the polymer will comprise from about 1.0 to about 90 percent, and more often from about 5.0 to about 70 percent, of the inorganic-polymer composite fiber total, with the foregoing percentages all being weight percent and all being on a dry basis. With the most preferred composite fiber, that is the $ZrO_2$-PTFE polymer fiber, and considering an end use as a diaphragm in a chlor-alkali cell, the zirconia will advantageously be present in major weight amount, i.e., exceed 50 weight percent of the product, and most preferably for best hydrophilic property the $ZrO_2$/PTFE polymer ratio ranges from about 2/1 to about 8/1 by weight. As will be recognized by those skilled in the art, such inorganic predominance will impart a hydrophilic property to the composite from the inorganic. In end use applications where a different result is desired, it will be desirable to have a predominant weight amount of the hydrophobic PTFE polymer.

To enhance formation of the non-organic-polymer composite fibers, it is preferred to employ a fiber-inducing substrate in the mix with a mixture of polymer plus inorganic. Such substrate can serve to enhance formation of polymer fiber, or maintain polymer in fiber form, and thus contribute to desirable composite fiber production. Preferably, the fiber-inducing substrate is a solid, pulverulent, inert material, or mixture of such materials, e.g., a material or mixture that by being inert will not react chemically with the polymer or the inorganic. Group I or Group II metal salts can be useful. Usually such pulverulent material is in granular form. Typical substrate materials are salt (NaCl), $CaZrO_3$, alumina, limestone, sugar, sand, graphite, and the like. This substrate material may generally be added to the mixture of polymer plus inorganic in an amount ranging from about 10 up to 2000 percent by weight, or even more, based on the combined weight of the polymer plus inorganic. More typically, the substrate will be added to the mixture in an amount of from about 20 to 500 weight percent of the combined polymer plus inorganic weight. After use, the substrate particles can be removed from the composite fibers by any mechanical means or combination thereof suitable for separating particulates from fiber, e.g., screening whereby the large substrate particles are screened from the fiber. Where most complete removal of the substrate from the final composite fiber product is desired, then it is preferable to use a soluble substrate, such as one soluble in a rinse liquid, e.g., a water soluble material such as NaCl, which can be first mechanically separated and then the residue removed from the final product by washing with water.

One useful substrate can be a pulverulent substrate that is the same as the non-organic material. Thus a particularly useful substrate will be zirconia of large particle size. Owing to its hardness, such large, particulate zirconia resists fracture and breakage during even impact grinding preparation of the composite fiber. Furthermore, when zirconia is in use as at least a portion of the organic, breakage of the larger substrate particulates will simply be transferred to useful material for composite preparation. The large zirconia particulates also avoid the use of any wash step for substrate separation, where separation will be needed and it will be desirable to avoid such step. Regardless of the substrate selected it is advantageous to use a substrate having an at least ten times greater average particle size than the average particle size of the non-organic. Usually all of the substrate particles will be retained on a 100 mesh screen (149 microns) and most always the particle size distribution for the substrate will range from 100 microns up to about 800 microns or more, with an average particle size within the range of from about 150 to about 300 microns being typical. Thus, minimum distinctions between average particle size of 20 times or more, e.g., from a 10 microns average particle size for the non-organic to a 200 microns average particle size for the substrate, will be most usual.

Included with the polymer plus inorganic, in addition to a fiber-inducing substrate and a liquid medium, there can be a great variety of additives and agents, especially when the polymer is present as a commercially available dispersion. Typically, additives can include dispersing agents, defoaming agents and wetting agents. Usual agents may also include stabilizers, e.g., dispersion stabilizers, ultra violet light stabilizers and the like, as well as dyes or other coloring agents. These are most typically not deliberately added during mixture formation, but rather are included in the polymer in its commercial preparation.

Usually, the first step in the method of forming the composite fiber product is the preparation of a mix of non-organic material and polymer material, preferably in an appropriate liquid media. The non-organic and the polymer may be preblended to form a material having a slurry or paste-like consistency. However, preblending is not necessary. Thus for instance, the non-organic and the polymer may simply be placed in a mill and the initial milling will cause the non-organic and polymer to blend thereby usually creating a slurry and/or paste. During preblending and/or blending, additional liquid media can be added. Processing should include an elevated mix temperature, e.g., a step of heating the polymer and non-organic at an elevated temperature and for a time dependent upon the identity of the polymer material employed, while vigorously grinding and/or shearing the polymer and non-organic in a grinding and/or shearing action, e.g., as by ball milling. Preferably, a ball mill is used, but a shearing blender, a ribbon blender, double screw blender, Brabender™ mixer, Banbury™ mixer, or Hobart™ mixer may also be used. As long as there is a heating means available in association with the blender, any vigorous shearing and/or grinding action may be employed, including spatula and beaker or mortar and pestle, although for efficient blending, such are

6

not preferred. In general, the nature of the inorganic will allow it to act as a grinding agent. Also, when employed, the fiber-inducing substrate, such as NaCl, will act as a grinding agent. Additionally, loose refractory metal and/or ceramic grinding media, such as steel or porcelain balls, typically of a dimension so as to have an 0.2 cm to 2 cm. diameter, may be employed to enhance the grinding such as in a ball mill.

Generally, the temperature and time is that sufficient to cause the polymer to soften and become flowable under pressure, but insufficient to be readily flowable without applied pressure or to lead to any significant decomposition of the polymeric material. The elevated temperature will typically range from around 50°C to around 200°C, although more elevated temperatures may be reached, although usually only for a short while. When a mill is used, the temperature may be achieved by heating the mill. For instance, when PTFE polymer granules are employed, the temperature is usually from 100°C to 180°C, and preferably from about 130° to 150°C. But the temperature will vary depending on the polymer used and its form. It is important that the entire mix of polymer and inorganic be allowed to reach the requisite temperature in order to assure at least substantially complete bonding of the non-organic material with the polymer, thereby combining the non-organic and polymer into the physical form of the composite polymer-non-organic fibers. The heating time is generally from 10 minutes to about 2 hours, and typically about 1 hour, with longer times of 3 hours or more being contemplated, but usually being uneconomical. It is preferred to employ venting during initial heating to drive off any volatiles, e.g., moisture of the slurry. During a typical run where the heating is for 1 hour, venting is usually conducted for about the first 5 to 30 minutes of the heating.

During the heated grinding and/or shearing, as by milling, the heating will be insufficient to provide that the polymer becomes readily free-flowing, but such that the polymer will flow such as when impacted. The polymer is therefore in the nature of being malleable. If the polymer were permitted to flow without shear, e.g., by excessive elevated temperature heating, discrete fiber production could not be attained. Thus the temperature is maintained below the heat induced flow temperature. The polymer particulates will each thereby be typically individually sheared and, being malleable, will be smeared and attenuated to a fibrillated form, e.g., by being impacted by milling. Also, the operation tends to "grow" polymer fibers from polymer particulates, with individual sheared particles often attaching under heated, impact flow condition, one to the other as they are attenuating to provide the growth. Typically, as in an impact grinding action the resulting fiber forms will mimic spiders or trees in form, e.g., be branched or have a nucleus with spokes. A great variety of fiber forms can however be expected, including some short and stocky unbranched individual fibers as well as much more lengthy and branched forms. The predominant fiber forms can be somewhat related to the grinding method with an impact grinding action using an exemplary PTFE polymer/zirconia blend, providing a high degree of more branched spider and tree shapes whereas a rotating grinding action with such blend can lead to more individual fibers.

At the same time during the forming and growing of the fibers, the non-organic particulates are being firmly bound to the fibrous polymer substrate. Such binding is mechanically-induced and can include a broad range of attachment, with some particles being more substantially exposed at the polymer surface, as by partial embedment therein in the nature of a tooth in a gum, while others can be encapsulated if shearing action and fiber growth is continued. It is important that not all of the non-organic particulates be fully encapsulated by the polymer fiber. This assures imparting some of the non-organic particulate character to the fiber surface, e.g., hydrophobicity where a hydrophilic polymer is used. Usually, a broad range or continuum of particle binding in the polymer substrate will be easily and efficiently achieved, ranging from a somewhat loose appearing embedment, but including some particulate encapsulation. Such range can be influenced by the grinding action used, the temperature employed, the proportion of the inorganic and the grinding time. For example, with a preferred PTFE polymer/zirconia mixture, having a major weight amount of the zirconia non-organic, a milling operation using a grinding media and a temperature of about 140°C with a 2 hour grinding time will produce many highly branched fibers of a polymer substrate that is extensively to virtually completely covered by non-organic particles. Higher temperatures, for example, will result in more individual, unbranched fibers with less coverage of inorganic particles. If the composite is then used to prepare a chlor-alkali cell diaphragm, for example, where rough treatment in preparation and handling may be encountered, it has been found that the composite can be extremely serviceable without deleterious loss of the non-organic particles in the cell. The composite is not just a mixture, but rather a multitude of fibrous, physical shapes having the particulate exposed at the surface of the polymer fibers while being bound firmly within the polymer. Thus it has been found that the non-organic particulates are readily resistant to physical separation from the fiber composite without fiber destruction, e.g., remain separation-free even under harsh and rough conditions for the handling and use of the composite fibers, as well as from such conditions of use for products prepared from such fibers.

The amount of particle coverage over the polymer surface is most directly influenced by the proportion of inorganic to polymer. This proportion can be dictated by the end use. For example, where the composite produced will be useful as a diaphragm in a chlor-alkali cell, it will be preferable to virtually completely cover the polymer with particulates, while minimizing particle encapsulation, i.e., maximizing particle exposure and thus useful particle surface area. This will enhance diaphragm hydrophilic nature. For other applications, e.g., where the composite will be pressed and may be sintered for use as a bearing or gasket material, or where the composite may be felted to be used as a filter or for other paper-like service, or where the fiber may be used as a filler such as to reinforce an elastomer, proportions of the mixture of polymer and organic may be varied. In pressing and sintering, for example, a predominance of polymer over organic may be useful with the inorganic supplying only a low surface area. As mentioned hereinabove, a variety of fiber forms will usually be found after processing a blend of inorganic and polymer.

After an impact grinding such as with a ball mill, the elevated temperature of operation will usually produce a dry product from which the grinding media is first separated out by physical means, e.g., screening. Where a moist material has been produced, similar physical separations can also be useful. Further physical processing such as screening may be utilized to eliminate fines, e.g., a substrate such as salt along with unused inorganic. Air classification is likewise useful for such removal. It may be further utilized for fiber separation, such as classifying short fibers from long. Other separation means accomplishing the same result can be used, e.g., further screening. Where a liquid soluble substrate has been used, the substrate can be removed by washing at any convenient step of the operation. Generally, any typical particle classification and washing procedures are contemplated for use and will be found to be serviceable. Where a non-impact grinding process has been used that does not employ an impact media, such as in a ribbon blending process, the foregoing procedures can be used, but with elimination of the grinding media separation step.

Virtually always, the length/diameter ratio of even the shortest, individual fiber, will be greater than 2/1 but more often will be from 20/1 to 50/1, but can be even 100/1 or more. It is advantageous for many uses, including filters and diaphragms, that the fibers be branched for desirable fiber entanglement. The main trunk of the highly branched inorganic-polymer composite fiber is usually from at least about 1 micron to 1000 microns, and more typically from 5 to 100 microns, in diameter. The length of an individual fiber will typically vary from about 2 microns up to about 25,000—30,000 microns in length.

Separators of Composite Fibers

In the context of separators, which is a major application of the composite fibers of the invention, for convenience the non-organic will be referred to as the "inorganic", as metals and their alloys are not contemplated for diaphragms.

In preparing the slurry of inorganic/polymer fibers for making the separator, the liquid medium is usually aqueous. It is to be understood that the slurry can have any viscosity serviceable for separator preparation, varying from a very thin mixture of only a minor amount of well dispersed fibers, up to thick mixtures more in the nature of a paste. Although other liquids than aqueous are contemplated to be useful, e.g., hydrocarbon and halohydrocarbon liquids, as well as mixtures of liquids including mixtures with water, such medium will most always simply be water, for economy. This liquid medium suitably may be aqueous, containing only a very low concentration of a base such as caustic, or it may be brine, or cell liquor, which can be synthetic or natural, e.g., containing about 15 percent NaCl and 15 percent NaOH, or mixtures of any of the foregoing. Such a low concentration of base can be less than one weight percent of usually just a hyudroxide such as an alkali metal hydroxide. Generally the low concentration will be from below one weight percent to 0.01 weight percent of base, and preferably, for economy, is from 0.05 to 0.5 weight percent. Highly concentrated basic solutions can also be used, such as greater than 30 weight percent and including as much as 50 weight percent, even up to saturation. Thus in general, a concentration of base from about 0.01 weight percent up to saturation can be utilized. Furthermore, the concentration of salt (NaCl) in the slurry medium may also vary to the same extent if desired, e.g., from about 0.01 weight percent up to saturation. Where salt has been used as a fiber-inducing substrate in composite fiber manufacture and residual salt is retained in the fiber, such can dissolve in the liquid medium during diaphragm formation.

The base is virtually always hydroxide, typically alkali or alkaline earth metal hydroxides or their mixtures. Most always these will be sodium or potassium hydroxide with the sodium hydroxide being preferred for economy.

Additionally, the slurry may contain components intended to modify the physical properties of the slurry. Generally, a surfactant is employed to wet the materials. This may be any of the numerous known wetting agents, usually a nonionic surfactant although others are contemplated for use. Representative non-ionic surfactants include octyl phenoxy polyethoxy ethanol and dioctyl sodium sulfosuccinate. Such additional slurry components may also even include other fibers, and these fibers may comprise asbestos fibers. Also thickening agent may be present, and such can be added to a fiber-containing medium or, more typically, the agent is first blended with the medium and then the composite fiber is admixed thereto. These agents include, but are not limited to, seaweed derivatives, polysaccharides, xanthan gum derivatives, polyacrylamides, soluble starch modifiers, gelatins, colloidal silica and the like. When used at low concentrations, these agents have been found to produce increased slurry viscosities by two or more orders of magnitude, while having only a minor effect on slurry density. Without said viscosity enhancers, the slurry viscosity can typically be around 10 centipoise. By addition of suitable agent, the viscosity can be greatly increased, e.g., to around 1,000,000 centipoise or more. The desirable viscosity of the slurry can be most always obtained when the viscosity enhancer is present in an amount of from about 0.01 to about 10 weight percent of the slurry. A most advantageous result, using the preferred xanthan gum derivative thickening agent, is an increase in the slurry viscosity to 1000 centipoise from an original viscosity of around 10 centipoise, without the viscosity enhancer.

The slurries of the present invention generally contain from 5 to 600, preferably 50 to 200, grams per liter of solids (inorganic/polymer composite fiber plus any, usually residual, fiber inducing substrate or the like) and from 0.01—0.1 weight percent surfactant. The amount of polymer to be present in the composite inorganic/polymer fiber will vary with the identity of the polymer and particularly with its physical form and has been more particularly discussed hereinabove.

The separator may be preformed by any method useful in such art. For example, a slurry of diaphragm-forming ingredients may be prepared and deposited in conventional paper-making procedure, or a release substrate, usually a film, may be utilized with the diaphragm formed thereon and then released in mat or film form for application to a cathode, such as has been discussed for example in U.S. Patent No. 4,070,257. Thus the substrate on which the slurry materials may be deposited include generally any such backing member that may be useful and is often porous, such as a screen, perforate plate, backing member, e.g., a film, or cathode. Generally, such cathodes are provided with a diaphragm by immersion in a slurry followed by drawing a vacuum on the catholyte chamber. This results in the desired deposition of the diaphragm, primarily on the active cathode surfaces, such as has been discussed for example in U.S. Patent No. 4,410,411. In the preferred method the diaphragm is directly deposited on the cathode. Typically this is achieved after a uniform slurry of inorganic/polymer composite fibers has been obtained, and the cathode or cathodes to be coated are immersed in the slurry, optionally with agitation of the slurry, and a vacuum is applied through the cathode chamber. This is the so-called "vacuum-drawn" method used for preparing a diaphragm from such a slurry.

Usually the vacuum used initially, where vacuum deposition is employed to deposit the slurry on to a substrate such as a cathode, starts at zero millimeters of mercury and then may vary from about 20 to 250 millimeters of mercury (less than 1.0 to 10 inches of mercury), later increasing to a more elevated vacuum, such as at equipment capacity, e.g., to about 650 to 750 millimeters (about 25 to 30 inches). The build up from the initial to the more elevated vacuum can suitably be accomplished in from about 5 to about 30 minutes. Often, the more elevated, usually capacity, vacuum will be held for from 5 to about 30 minutes, with the shorter times typically being maintained where a longer time for reaching vacuum capacity has been employed. Such times should be sufficient for providing a desirable, uniform coating on the substrate. The thus-coated substrate, such as a cathode, is then removed and dried, which may simply be air drying, but is most always dried at an elevated temperature, e.g., from about 50°C., up to about 130°C., with a temperature within the range of from about 70—100°C. being more typical. At elevated temperature, drying time can be on the order of from about 0.5 hour to 4 hours or more, but for economy will usually not exceed 3 hours. By following such procedures, a separator typically having a thickness of from about 0.03 to 3 centimeters (from about 5 to 500 mils), and more usually from about 0.3 to about 1.5 centimeters (from about 50 to about 250 mils) is obtained.

The next step is that of heating the diaphragms at a temperature and for a time dependent upon the identity of the polymer component employed in the composite inorganic/polymer fibers. Generally, this temperature and time is that sufficient to cause the composite inorganic/polymer fibers to soften for fusing adjoining fibers but insufficient to lead to any significant decomposition of the polymeric material. By way of representation, for a fiber composite having PTFE polymer, a polymer fusion temperature for the composite fibers of from about 300°C. to about 390°C. can be serviceable, with a temperature within the range of 325°—370°C. being more typical. Usually, the heating is from about 0.25 hour to 3 hours, and more preferably for economy is from about 0.25 to 1.5 hours. It is to be understood that the above-mentioned drying plus the heating for fusion can be a one-step procedure, usually with gradually increasing temperature from an initial drying to subsequent polymer fusion of adjoining fibers.

The requisite heating may be attained for example by inserting the preformed diaphragm or diaphragm coated cathode into an oven. It is important that the entire diaphragm be allowed to reach the requisite temperature in order to assure maximum and complete polymer fusion. The temperature and time employed will be that sufficient to allow the inorganic/polymer composite fibers to fuse together thereby forming a mechanically stable, permeable mat, e.g., a mat coating on a cathode. Owing to the nature of the polymer employed, a discontinuous inorganic/polymer composite fiber diaphragm can be obtained. The diaphragm, or diaphragm coated cathode is then allowed to cool to room temperature and is then typically ready for assembly in a chlor-alkali cell.

The cathodes on which the present dimensionally stable, inorganic/polymer composite fiber diaphragms are placed are generally any cathodes on which a diaphragm can be directly deposited or on which a preformed diaphragm, usually in mat form, can be placed. Preferred cathodes generally comprise an integral part of the cathode can, traversing the width of the cell and being designed to interleave in an alternate fashion with a plurality of vertically disposed anodes. Exemplary of such cathodes are those described in U.S. Patent 2,987,463. These cathodes are typically foraminous in nature, e.g., mesh, perforated sheet or expanded metal, usually being constructed of a wire screen, and define an interior catholyte chamber. Cathode materials of construction include any of those used in such art, such as nickel, iron and alloys of such metals, e.g., steel cathodes.

The product of the above-described preferred process is a uniform and coherent diaphragm, which may further be an adherent diaphragm coating directly on a cathode. The deposited diaphragm will typically have a weight per unit of surface area of between about 3 to 12 kilograms per square meter and more typically from about 4—7 kilograms per square meter for exemplary diaphragms from zirconia-PTFE composite fibers. For other fibers, containing titania in place of zirconia, such weight may be even less,

9

such as below 3 or even less. The diaphragm typically exhibits substantially no swelling under operating cell conditions as compared to the prior art polymer-modified asbestos diaphragms which normally swell around 25 percent. Moreover it is easily possible in the present invention to readily deposit the diaphragm on a cathode and yet have essentially none of the diaphragm extending through the plane defined by the mesh cathode. This can provide for enhanced hydrogen gas release, such as upon comparison with conventional diaphragms which can be partially pulled through this plane by the vacuum deposition step. It has also been found that diaphragm coated cathodes of the present invention provide for ease of removal of the diaphragm from the cathode. Most importantly, used diaphragms, such as those using the preferred PTFE polymer and zirconia fiber can be simply and readily disposed of, without special handling or precautionary concern for any health hazards that can be associated with the disposal of conventional diaphragms.

Representative Process for Composite Fiber Preparation

A very representative method of making the inorganic-polymer composite fibers is as follows. Into a container place the inorganic and add a polymer dispersion thereto. Mix the contents thoroughly before adding a fiber-inducing substrate such as salt. Repeat the mixing procedure. Take a container to dry the sample in. Obtain a gross mixture weight and dry for one hour at an elevated temperature, e.g., at 160°C. Check the sample weight and continue drying to remove all liquid added from the polymer dispersion. Place the thoroughly dried and mixed material in a preheated crock. The crock should be about half full of grinding media and preheated to elevated temperature, such as by heating at 160° for 1 hour. Heat the crock and its contents for 30 minutes at the 160°C elevated temperature. Remove the crock and place on a mill. Adjust the heating to maintain the 160°C. Mill for a desired time. If the milling is to be carried out at a different temperature, the drying and preheating steps can be adjusted.

In order that those skilled in the art may more readily understand the present invention and certain preferred embodiments by which it may be carried into effect, the following specific examples are afforded.

### Example 1

A mix is prepared by using 110 grams of Teflon™ 30B PTFE polymer dispersion (E. I. DuPont de Nemours & Co.), containing about 60 percent solids dispersed in water, including about 6 percent nonionic wetting agent, based on the weight of solids, and having general particle size range for the PTFE polymer of 0.05—0.5 micron. The primary diameters of the PTFE polymer particles in the dispersion average from about 0.2 micron to about 0.5 micron. There is then combined with this dispersion 150 grams of $ZrO_2$ powder having a particle size such that all particles are more finely-divided than 325 mesh (44 microns), 800 grams of NaCl, and 2400 grams of 0.5 inch (1.27 cms.) diameter steel balls. The procedure followed is the "Representative Process" described hereinabove in connection with the examples, but at a temperature of 140°C.

In the meantime, a ball mill grinder is pre-warmed to 140°C. The dispersion is placed in the mill and ground with heating at 140°C for 1 hour. During the first 10 minutes of heating, the mill is vented to allow escape of the moisture from the aqueous dispersion. The product is then screened with a 0.375 inch (0.9525 cm.) mesh screen to remove the steel balls. If desired, the product may then be washed in water to remove the salt. The resultant product is composed of individual hydrophilic highly branched, rough surfaced, non-isotropic zirconia-polytetrafluoroethylene composite fibers irregular in shape, texture and inorganic distribution, as well as having non-uniform morphology. In general, virtually all individual composite fibers have a length/diameter ratio of greater than 2/1, with many of the main trunks having a length approaching approximately 10,000 microns and a diameter of approximately 20 microns. The fiber is an off-white, free-flowing and somewhat fluffy particulate, dry to the touch and having a soft feel and texture. The non-compacted fiber has a specific gravity of approximately 4—5 grams per cubic centimeter.

### Example 2

The procedure of Example 1 was repeated except that 156 grams (g) of $CaZrO_3$, −48 to +100 mesh, was substituted for the 800 g of NaCl and a Brabender mixer was used instead of a ball mill. The result is highly branched zirconia-PTFE polymer composite fibers similar in size and shape to those of Example 1.

### Example 3

The procedure of Example 1 is repeated except that a dry PTFE polymer powder having an average particle size of 100 microns is used, the mix is heated to 135°C instead of 140°C. The result is highly branched zirconia-PTFE polymer composite fibers similar in size and shape, as well as general characteristics, to those of Example 1.

### Example 4

A mix is prepared by mixing 45 g (grams) of a PFA polymer dispersion, 45 g zirconmia, and 240 g of NaCl. The procedure used is the hereinabove described "Representative Process", with the grinding of the mixture being in a ball mill using number 15 steel balls (0.25 inch (0.635 cm.) diameter), and it is conducted at 110°C for 40 minutes, with venting during the first 20 minutes. The result is highly branched zirconia-PFA polymer composite fibers similar in size and shape and characteristics to those of Example 1.

### Example 5

The procedure of Example 4 is repeated except that 45 g of $TiO_2$ is used instead of $ZrO_2$. The result is highly branched titania-PFA polymer composite fibers similar in size and shape and characteristics to those of Example 1.

### Example 6

The procedure of Example 4 is repeated except that a temperature of 135°C is used instead of 110°C. The result is highly branched zirconia-PFA polymer composite fibers in general having a length/diameter ratio of greater than 2/1 and other characteristics as described in Example 1.

### Example 7

Into a mortar there is charged 0.4 weight parts of the PTFE polymer dispersion of Example 1 together with 10 weight parts of zirconium oxide powder, all passing 325 mesh (44 microns). The mortar and its contents are placed in an oven, heated at 100°C, for 5 minutes. The mortar is removed from the oven and immediately manually (using gloves) vigorously mixed and ground with a pestle for 2 minutes. Thereafter, the resulting ground contents of the mortar are poured into a bottle filled with water, the bottle capped and vigorously shaken. Upon standing, residual zirconia powder immediately settles. There remains dispersed in the water composite zirconia/PTFE polymer fibers such as described in Example 1, e.g., off-white fibrous particulates.

### Example 8

There is premixed 110.23 grams of sodium chloride, 2 grams of boron nitride (BN) having a less than 53 micron particle size, and 2 grams of a dry PTFE polymer powder passing 12 mesh. A 1.2 liter crock having 317.3 grams of high density $Al_2O_3$ balls is preheated to 125°C. The premix is charged to the preheated crock and then milled for 1 hour. Final temperature of the contents is 148°C. The mill charge is screened to remove the balls, water washed in a dispersator and water rinsed on a 60 mesh screen. The rinse material is dried at 125°C in an oven for 5 hours. The product consists of off-white fibrous particulates of a PTFE polymer/boron nitride composite.

### Example 9

A premix is made with 1,315 grams of sodium chloride, 40 grams of boron carbide ($B_4C$) having a less than 44 micron particle size, and 25 grams of the PTFE polymer of Example 8. Into a 13 liter crock containing 8.3 pounds (3.76 kgs.) of the balls of Example 8, and all preheated to 131°C, there is placed the premix. The mix is milled in the crock for 55 minutes, as heating is continued, the final temperature of the mix being 162°C. Screening of the resulting materials to remove the balls also removes some clumps of milled material. The resulting screened product is water washed in a dispersator and oven dried at 130°C overnight. Their results 55.42 grams of light gray, thin fibrous fluffy and hairy particulates of boron carbide-PTFE polymer composite fibers.

### Example 10

Into the crock of Example 8 there is placed 316 grams of the balls of Example 8. The crock and its contents are preheated to 145°C and there is then charged to the crock a premix containing 110 grams of sodium chloride, 4.45 grams of the PTFE polymer dispersion of Example 1 and 10.82 grams of alumina ($Al_2O_3$) having a less than 53 micron particle size. The milling time is 70 minutes and the final temperature of the contents is 153°C. After separation, using first a 16 mesh screen and then next a 25 mesh screen to separate out loose salt and alumina, there results short, ribbon-like, branched alumina-PTFE polymer fibers.

### Example 11

Into the ceramic crock of Example 8 there is placed the same charge of balls as in Example 8 and the combination is preheated to 130°C. Into the preheated combination there is charged a premix containing 110 grams salt, 4 grams of activated carbon having all particles more finely divided than 45 microns, as well as 2 grams of the PTFE polymer of Example 8. The mix is milled for 70 minutes and has a final milling temperature of 140°C. The milled mixture is screened and washed, followed by drying, in the manner of Example 8 but using in the wash a small amount of a liquid non-ionic octylphenoxy polyethoxyethanol surfactant having an HLB of 13.5. There results dark gray, fibrous carbon-PTFE polymer composite fibers.

### Example 12

Into the crock of Example 9 and using the same charge of balls as in Example 9, both preheated to 130°C, there is charged a premix containing 1315 grams salt, 60 grams of talc, which is a naturally-occurring hydrated magnesium silicate mineral, and 200 grams of the PTFE polymer of Example 8. The contents are milled for 60 minutes and reach a final temperature of 154°C. The product is screened to remove loose salt and free talc and is then washed and dried in the manner of Example 9. There results 59.4 grams of off-white talc-PTFE polymer composite fibers.

Example 13

Two die plugs of highly polished cold-rolled steel are prepared for molding. Both plugs have $2\frac{1}{4}$ inch (5.72 cms.) die faces. Magnesium stearate mold release powder is lightly brushed on each die face. One die plug is enclosed in a $2\frac{3}{4}$ inch (6.99 cms.) high die cylinder, with the plug being face up. A 10 gram sample of zirconia-PTFE composite fibers made in the manner of Example 1 is poured onto the enclosed die face and manually dispersed with a stirrer. The second die plug is inserted into the die cylinder, face down, to completely enclose the fiber sample.

The sample is compressed in a hydraulic press at 10 KPSI, with the pressure building to the maximum in 20 seconds and then being immediately released (no dwell time). There results a compressed 5.72 × 0.117 cm. disc having a density of 3.05 gms/cm$^3$. The disc is sintered at 350°C. for one hour. There results a tough, rugged sheet-like material. A similar disc, but vacuum deposited on a 710 micron screen at 25.4 cms. vacuum (Hg gauge), rather than hydraulic compression, and then sintered, is cut into a ring. The ring is 0.114 cm. in thickness with a 6.35 cm. I.D. and an 8.26 cm. O.D. The resulting ring is used as a gasket under the jar lid of a 1.2 liter volume porcelain ball mill jar. The ring is successfully used repeatedly in such manner without physical degradation and is regarded as supplying a highly desirable seal in such operation.

Example 14

A slurry medium is prepared by dispersing in 1 liter of water, 1 gram of a tan, powdered xanthan gum derivative having a pH of 5.0—6.6 at a one weight percent concentration in deionized water (Kelzan™ S sold by Kelco Co.) and continuing the mixing for 15 minutes. To the 1 liter thickened water slurry is then added with mixing 275 grams (50 weight percent of fibrids plus residual salt) of inorganic/polymer composite fibrid and salt mixture. This fibrids mixture comprises zirconia as the inorganic and polytetrafluoroethylene as the polymer along with residual salt and is prepared as described in the paragraph above. Mixing with a dispersator is continued for 10 minutes to 1 hour to obtain a uniform slurry.

A mesh cathode (.093 inch (0.236 cm.) steel wire calendared to a thickness of 0.155 inch (0.394 cm.)) is positioned horizontally near the bottom of a depositing box. The slurry is then placed on top of the cathode inside of the depositing box and a vacuum is applied to the opposite side of the cathode, said vacuum increasing from 0 to 17 inches (0—43 cms.) (Hg gauge) during an 11 minute cycle and holding at full vacuum for 10 minutes. The deposit covered cathode can is then placed in an oven and dried at 95°C for 3 hours, and heated at an elevated 345°C for 1 hour to fuse the diaphragm. The polymer of the composite fibers softens and coats the cathode, forming a perforate polymer coating. At the elevated temperature, adjacent fibers fuse together at points of contact, thereby obtaining a matted fiber coating that preserves organic particles at the surface of the interconnected fibers of the mat. There results a discontinuous inorganic/polymer composite fiber coating on the surface of the cathode. The diaphragm coated cathode is then allowed to cool to room temperature for assembly in the cell. The product of the above-described preferred process is a uniform, adherent, and coherent diaphragm coating directly on the cathode, which coating typically exhibits substantially no swelling under operating cell conditions as compared to the prior art polymer-modified asbestos.

The thus prepared diaphragm coated cathode was gasketed and then was employed opposite from the dimensionally stable anode of a laboratory bench cell using narrow gap configuration and employing saturated brine as the anolyte at an operating temperature of about 90°C. When thus put into service, the performance of the cell equipped with the diaphragm as just described was not only superior to a cell with a conventional modified asbestos diaphragm but also exhibited longer operating life, safer operation, and greater resistance to changes in operating conditions. Results are summarized in Table I below.

Example 15

The general procedure of Example 14 was followed except that the zirconia/polytetrafluoroethylene composite fibrids were produced using a Ribbon Blender mixer instead of a ball mill. The composite fibrids are added to a water slurry thickened with 0.9 gram per liter of water of xanthan gum derivative thickener and a vacuum cycle is applied to deposit fibrids directly on a mesh cathode. Drying and heating as in Example 14 is then applied. The resultant highly branched zirconia-PTFE composite fibrids having been fused were then employed in a chlor-alkali cell for 39 days with an average performance of 3.09 volts at a current density of 1 amp per square inch and a current efficiency of 91.2 percent with production of 133 grams per liter of NaOH concentration, yielding a power consumption of 2270 kilowatt hours per metric ton NaOH. Results are summarized in Table I below.

Example 16

A 20 liter depositing bath for vertical deposition was prepared having a 1 gram per liter xanthan gum derivative thickened water slurry. To this was added 4000 grams of mix material of inorganic/polymer composite fiber and salt as in Example 14. Mixing agitation was conducted with the use of a dispersator. The slurry bath was agitated with an air sparger prior to deposition to maintain bath uniformity. The cathode can with cathode in place was lowered in the depositing tank with slurry bath completely covering the cathode can assembly. During 10 minutes, a vacuum cycle increasing from 0 to 17 (0—43 cms.) inches was employed and then followed by a 10 minute hold at the 17 inch maximum vacuum.

The deposited cathode can be placed in the oven and dried at 100°C overnight and heated at 350°C for 1 hour to fuse the diaphragm. Operating results are described in Table I.

### Example 17

A slurry of 2.5 grams per liter xanthan gum derivative in water with 275 grams of mixed salt and composite fibrid, as in Example 14, was blended with the aid of a dispersator. The vacuum cycle applied was from 0 to 17 inches (0—43 cms.) over 7 minutes with a 7 hour hold at the full vacuum. The diaphragm was dried at 104°C for 3 hours and heated at 345°C for 15 minutes to fuse the diaphragm, with operating results reported in Table I.

### Example 18

A water only slurry of 1.5 liters was used with 830 grams of mixed inorganic/polymer fiber and salt, as in Example 14, and employing a dispersator for fibrid dispersion. The vacuum cycle was conducted from 0—17 inches (0—43 cms.). The diaphragm was dried at 100°C for 1 hour and baked at 345°C for $\frac{1}{2}$ hour, with operating results reported in Table I.

### Example 19

A slurry comprising 0.9 gram per liter xanthan gum derivative in water with 275 grams of mixed salt and composite fibrid, as in Example 14, was fully mixed and subsequently deposited onto the cathode. The vacuum cycle was run from 0—17 inches (0—43 cms.) over 10 minutes with final vacuum of 17 inches achieved and held for 15 minutes. The diaphragm was dried at 115°C for 2 hours and baked at 345°C for $\frac{1}{2}$ hour. See Table I for cell performance.

### Example 20

A slurry comprising 1.0 gram per liter xanthan gum derivative in water with 275 grams of mixed salt and composite fibrid, as in Example 14, is prepared. The slurry is prepared by adding the mixed salt and composite fibrid during dispersator agitation of the thickened water. A deposit vacuum cycle of 0 to 17 inches (0—43 cms.) for 12 minutes was used with excess filtrate being removed from the front side. Final vacuum was held briefly with cathode can and diaphragm being dried at 120°C for 1 hour and bake cycle being at 350°C for 1.2 hour. Cell performance results are in Table I.

### TABLE I

Inorganic/Polymer Composite Diaphragm Operating Data

| Ex.No. | Days on Line | Volts* 1 ASI | CE%* | NaOH Conc g/l | Power** KWH/MT NaOH | Brine Head (inch) |
|---|---|---|---|---|---|---|
| 14 | 75 | 2.87 | 91.0 | 130 | 2113 | 1.9 |
| 15 | 39 | 3.09 | 91.2 | 130 | 2270 | 3.5 |
| 16 | 117 | 3.10 | 93.3 | 134 | 2226 | 2.0 |
| 17 | 82 | 2.97 | 92.5 | 130 | 2151 | .8 |
| 18 | 181 | 3.29 | 90.0 | 134 | 2449 | .8 |
| 19 | 31 | 3.20 | 90.5 | 130 | 2369 | 2.75 |
| 20 | 133 | 3.02 | 90.4 | 130 | 2238 | 4.0 |

\* 1 ASI (amp per square inch) = 6.45 amps per square centimeter. CE = Current Efficiency
\*\* The power in Table I is calculated in kilowatt hours per metric ton of NaOH.

### Example 21

Four additional diaphragms were prepared in a manner similar to Example 14, and the current efficiency of each in operation compared with the current efficiency of a commercial plant average for chlor-alkali cells containing "SM—2™" asbestos and polytetrafluoroethylene diaphragms made according to U.S. Patent 4,444,640 in operation. The results are reported in Table II below.

TABLE II

Additional Inorganic/Polymer Composite Diaphragm Operating Data

| 5 Diaphragm | Weight | GAP** | VOLTS** | BRINE HEAD* | %CCE* | KWH* per ton Cl$_2$ |
|---|---|---|---|---|---|---|
| 131661021 | 170 G. | ZERO | 2.78 | 0.18" | 90.4 | 2109 |
| 131661172 | 140 G. | 1/8" | 2.84 | 0.82" | 89.9 | 2166 |
| 131661191 | 138 G. | 1/8" | 2.90 | 0.84" | 91.9 | 2164 |
| 131661241 | 128 G. | ZERO | 2.99 | 0.70" | 93.9 | 2184 |
| AM—2 AVG | 36 G. | 1/8" | 2.97 | 4-10" | 93.1 | 2188 |

* All values are corrected to operation at 1 ASI, 95 degrees C., and production of 135 grams per liter NaOH concentration. The brine head was measured in inches. KWH refers to kilowatt hour. CCE refers to the corrected current efficiency. G = grams and AVG, = average.

** GAP refers to the spacing between the anode and diaphragm surfaces. Spacing of 1/8 inch (0.3175 cm.) is normal for commercial operation; however, dimensionally stable diaphragms as in the present invention can be operated with the anode flush against the diaphragm surface, or at "zero gap". Reduction of this spacing from 1/8 inch to zero normally results in savings of about 50 mV. or 35 Kilowatt Hour per short ton of chlorine.

**Claims**

1. A fiber composite comprising fibers of an organic polymer having finely-divided non-organic refractory particulate bound firmly with said polymer at least substantially within the surface thereof so as to be resistant to physical separation from the fibers without fiber destruction, characterised in that the fibers are fibrillated non-isotropic fibers having a non-uniform morphology, at least some of the fibers being branched.

2. The fiber composite of claim 1, wherein said non-organic particulates are partly encapsulated in said polymer fiber and partly embedded in the surface of said polymer fibers.

3. The fiber composite of claim 1, wherein said organic polymer fibers have diameters within the range of from about 1 micron to about 1,000 microns.

4. The fiber composite of claim 1, wherein a major weight portion of said non-organic particulates is finer than about 150 microns.

5. The fiber composite of claim 1, wherein said non-organic particulates comprise very finely-divided substances selected from metal oxides, metal carbides, metal borides, metal silicides, metal sulfides, metal nitrides, silicates, aluminates, ceramics, cermets, carbon, metals, alloys or mixtures thereof.

6. The fiber composite of claim 5, wherein said non-organic particulates are selected from valve metal oxides and their mixtures.

7. The fiber composite of claim 1, wherein said polymer comprises at least one halogen-containing polymer which includes fluorine.

8. The fiber composite of claim 1, wherein the length of the main trunk of the branched fibers is within the range of from 1 micron to about 30,000 microns and with the length/diameter ratio for said fiber composite being greater than 2/1.

9. The fiber composite of claim 1, further including a fiber-inducing substrate.

10. The fiber composite of claim 9, wherein the fiber-inducing substrate is a solid, pulverulent, inert material.

11. The fiber composite of claim 10, wherein the fiber-inducing substrate is selected from salt, CaZrO$_3$, alumina, limestone, sand, graphite, or mixtures thereof.

12. The fiber composite of claim 1, wherein said composite is an off-white, free-flowing and fluffy dry particulate of soft texture comprised of very finely-divided zirconia bound firmly within the surface of a halogen-containing organic polymer fiber.

13. A method of making the fiber composite of any preceding claim, comprising:

(1) combining said non-organic particulates and organic precursor particles for said polymer;

(2) bringing the combination of particulates and particles to an elevated temperature sufficient for said organic polymer to soften and flow under pressure but insufficient for substantial decomposition of said polymer; and

(3) vigorously grinding or shearing said combination at said elevated temperature for a time sufficient to allow the softened organic precursor particles to flow under grinding or shearing pressure and fibrillate in the presence of said particulates thereby firmly binding said particulates with said softened polymer during fiber formation.

14. The method of claim 13, wherein said combination further includes a liquid media.

15. The method of claim 14, wherein there is combined from 1 to 90 percent by weight of polymer and a balance of inorganic particulates, exclusive of any liquid media.

16. The method of claim 14, wherein the said method further includes venting as said combination is brought to said elevated temperature to allow escape of volatiles from the combination.

17. The method of claim 13, wherein said elevated temperature is maintained within the range of from about 50°C to about 200°C for a time of up to about 2 hours.

18. The method of claim 13, wherein there is combined polymer particles comprising granules having a size within the range of from about 0.05 to about 200 microns together with non-organic particulates having a size such that the major weight portion is finer than about 150 microns.

19. The method of claim 13, wherein said combination further includes a fiber-inducing substrate.

20. The method of claim 19, wherein said fiber-inducing substrate has an average particle size at least ten times greater than the average particle size of said non-organic particulates.

21. The method of claim 13, wherein said grinding or shearing initially blends said non-organic particulates and organic polymer particles, thereby creating a slurry or paste.

22. The method of claim 13, wherein said non-organic particulates and organic polymer particles are combined into a preblended slurry or paste.

23. The method of claim 13, wherein said non-organic particulates serve as a grinding agent.

24. The method of claim 19, wherein said fiber-inducing substrate acts as a grinding agent.

25. The method of claim 13, wherein said shearing or grinding occurs in a blender or mill having loose, particulate and refractory impact grinding media included therein.

26. The method of any of claims 13—25, wherein the organic particle precursors are selected from powders, granules, polymer aggregates and agglomerates, fragments, chunky fibers and mixtures thereof.

27. A compressed organic plus non-organic composite body comprising, in compressed form, the fiber composite of any one of claims 1—12.

28. The composite body of claim 27, wherein said compressed form is sintered.

29. A fiber reinforced material comprising an elastomeric matrix reinforced with the fiber composite of any one of claims 1—12.

30. A porous and dimensionally stable separator comprising a heat-induced fused interconnection in a sheet-like form of a fiber composite of any one of claims 1—12.

31. A diaphragm-coated cathode comprising a foraminous cathode bearing on the cathodically active surfaces thereof, a porous and dimensionally stable separator according to claim 30.

32. The method of producing a hydraulically permeable, dimensionally stable separator on a substrate, said separator being especially adapted for use in an electrolyte cell, which method comprises:

(a) forming a slurry of a fiber composite according to any one of claims 1—12, in which the polymer component is mechanically and chemically resistant to the cell environment and the inorganic component is chemically resistant to the cell environment;

(b) depositing, by means of a pressure differential, said slurry as a uniform mixture of said inorganic/polymer composite fibers onto a substrate;

(c) subjecting the deposit to a temperature sufficient and for a time sufficient to allow the composite fibers to fuse together thereby forming a mechanically stable, permeable mat; and

(d) cooling said permeable mat to substantially room temperature, whereby there is obtained a separator dimensionally stable under operating cell conditions.

33. The method of claim 32, wherein step (b) comprises depositing onto a porous substrate selected from a screen, backing, perforate plate, or cathode.

34. The method of claim 32, wherein step (b) comprises inserting a foraminous cathode into said slurry and depositing a uniform mixture of said fiber composite thereon by means of a pressure differential.

35. The method of claim 32, wherein step (a) comprises adding to water a mix material of said composite fibers containing 0—70 percent by weight of residual fiber-inducing substrate, said mix material being added in an amount of 5—600 grams per liter of water.

36. The method of claim 32, wherein step (b) comprises starting with 0 millimeter vacuum and increasing to 350—650 millimeters vacuum during 5—30 minutes followed by maintaining such elevated vacuum 5—30 minutes.

37. The method of claim 32, wherein step (c) comprises a first drying temperature of 70—130°C for about 0.5—3.0 hours and a second polymer fusing temperature of 300—390°C for about 0.25—3 hours.

38. The method of claim 32, wherein the fiber composite of the slurry of step (a) has a polymer component comprising from 5 to 70 percent by weight of the composite fiber total and the concentration of composite fibers in the slurry is within the range of 50 to 300 grams per liter.

39. The method of claim 32, wherein the slurry of step (a) contains 0.5—2.5 grams of thickening agent per liter of slurry.

40. The method of claim 32, wherein the slurry of step (a) is formed with polymer fibers prepared from

EP 0 196 317 B1

polymer granules having a particles size within the range of 0.05 to 200 microns and made of polyvinyl fluoride, polyvinylidene fluoride, polytetrafluoroethylene, polychlorotrifluoroethylene, polyperfluoroethylene propylene, the copolymer of ethylene and chlorotrifluoroethylene, polyfluoroalkoxyethylene polymers and mixtures of the foregoing.

41. The method of claim 32, wherein the treatment of step (c) is sufficient for the polymer of the fibers to soften but insufficient to lead to any significant decomposition of the polymer.

42. The method of claim 32, wherein the slurry of step (a) includes an amount of fiber-inducing substrate.

43. The method of claim 42, wherein the slurry of step (a) includes a solid, granular, inert fiber-inducing substrate comprising NaCl, $CaZrO_3$, alumina, limestone, sand, graphite, or mixtures thereof, and the fiber-inducing substrate is present in an amount of from about 10 to 1000% by weight based on the weight of the composite fiber.

44. The method of claim 32, wherein step (a) comprises mixing said fiber composite with water free from base.

45. The method of claim 32, wherein step (a) comprises mixing said fiber composite with water containing from 0.05 to about 0.5 weight percent base.

46. The method of claim 32, wherein step (a) comprises mixing said fiber composite with water containing from greater than 30 weight percent base up to saturation of said base.

47. A mixture especially adapted for depositing a dimensionally stable separator onto a substrate, which mixture comprises liquid medium containing a fiber composite of any one of claims 1—12.

48. The mixture of claim 47, wherein said liquid medium contains from about 0.05 to about 0.5 weight percent base.

49. The mixture of claim 47, wherein said liquid medium contains from greater than 30 weight percent base up to saturation of said base.

50. A cell comprising an anode and a cathode having therebetween a dimensionally stable separator in matted form of the fiber composite of any one of claims 1—12.

51. Use of the separator of claim 30, for the production of chlorine and caustic in a chlor-alkali cell.

**Patentansprüche**

1. Faserverbundmaterial, das Fasern eines organischen Polymeren mit fein zerteilten nichtorganischen hitzebeständigen Feinteilchen enthält, die zumindest im wesentlichen innerhalb der Oberfläche des Polymeren mit diesem fest verbunden sind, um ohne Faserzerstörung gegenüber der physikalischen Abtrennung von den Fasern beständig zu sein, dadurch gekennzeichnet, daß die Fasern fibrillierte nichtisotrope Fasern mit einer nicht einheitlichen Morphologie sind, wobei mindestens einige der Fasern verzweigt sind.

2. Faserverbundmaterial nach Anspruch 1, bei dem die nichtorganischen Feinteilchen teilweise in der Polymerfaser eingeschlossen und teilweise in der Oberfläche der Polymerfasern eingebettet sind.

3. Faserverbundmaterial nach Anspruch 1, bei dem die organischen Polymerfasern Durchmesser im Bereich von etwa 1 bis etwa 1000 µm aufweisen.

4. Faserverbundmaterial nach Anspruch 1, bei dem ein überwiegender Gewichtsanteil der nichtorganischen Feinteilchen feiner als etwa 150 µm ist.

5. Faserverbundmaterial nach Anspruch 1, bei dem die nichtorganischen Feinteilchen sehr fein zerteilte Substanzen ausgewählt aus Metalloxiden, Metallcarbiden, Metallboriden, Metallsiliciden, Metallsulfiden, Metallnitriden, Silikaten, Aluminaten, Keramiken, Metallkeramiken, Kohlenstoff, Metallen, Legierungen oder Mischungen dieser umfassen.

6. Faserverbundmaterial nach Anspruch 5, bei dem die nichtorganischen Feinteilchen aus Ventilmetalloxiden und deren Mischungen ausgewählt sind.

7. Faserverbundmaterial nach Anspruch 1, bei dem das Polymer mindestens ein halogenhaltiges Polymer enthält, das Fluor enthält.

8. Faserverbundmaterial nach Anspruch 1, bei dem die Länge des Hauptstranges der verzweigten Fasern im Bereich von 1 µm bis etwa 30 000 µm liegt und das Länge/Durchmesser-Verhältnis für das Faserverbundmaterial größer als 2/1 ist.

9. Faserverbundmaterial nach Anspruch 1, welches außerdem ein die Faserbildung förderndes Substrat enthält.

10. Faserverbundmaterial nach Anspruch 9, bei dem das die Faserbildung fördernde Substrat ein festes pulveriges inertes Material ist.

11. Faserverbundmaterial nach Anspruch 10, bei dem das die Faserbildung fördernde Substrat aus Salz, $CaZrO_3$, Aluminiumoxid, Kalkstein, Sand, Graphit oder deren Mischungen ausgewählt ist.

12. Faserverbundmaterial nach Anspruch 1, bei dem das Verbundmaterial gebrochen weiße frei fließende und lockere trockene Feinteilchen von weicher Beschaffenheit sind, die aus sehr fein zerteiltem Zirkoniumoxid bestehen, welches fest innerhalb der Oberfläche einer halogenhaltigen organischen Polymerfaser gebunden ist.

13. Verfahren zur Herstellung des Faserverbundmaterials nach einem der vorangehenden Ansprüche, bei dem

16

(1) die nicht-organischen Feinteilchen und die organischen Vorläuferteilchen für das Polymer kombiniert werden,

(2) die Kombination der Feinteilchen und der Teilchen auf eine erhöhte Temperatur gebracht wird, die für das organische Polymer ausreicht, um zu erweichen und unter Druck zu fließen, aber für eine wesentliche Zersetzung des Polymeren unzureichend ist, und

(3) die Kombination bei der erhöhten Temperatur ausreichend lange intensiv gemahlen oder geschert wird, um den erweichten organischen Vorläuferteilchen zu gestatten, unter dem Mahl- oder Scherdruck zu fließen und in der Gegenwert der Feinteilchen zu fibrillieren, wodurch die Feinteilchen während der Faserbildung mit dem erweichten Polymer fest verbunden werden.

14. Verfahren nach Anspruch 13, bei dem die Kombination außerdem ein flüssiges Medium enthält.

15. Verfahren nach Anspruch 14, bei dem 1 bis 90 Gewichtsprozent Polymer und abgesehen von flüssigen Medium auf 100 Gewichtsprozent anorganische Feinteilchen kombiniert werden.

16. Verfahren nach Anspruch 14, bei dem das Verfahren außerdem Entlüften einschließt, während die Kombination auf die erhöhte Temperatur gebracht wird, um die Abgabe von flüchtigen Bestandteilen aus der Kombination zu gestatten.

17. Verfahren nach Anspruch 13, bei dem die erhöhte Temperatur im Bereich von etwa 50 bis etwa 200°C für bis zu etwa 2 Stunden aufrechterhalten wird.

18. Verfahren nach Anspruch 13, bei dem Polymerteilchen, die Körnchen mit einer Größe im Bereich von etwa 0,05 bis etwa 200 μm umfassen, zusammen mit nicht-organischen Feinteilchen mit einer derartigen Größe kombiniert werden, daß der überwiegende Gewichtsanteil feiner als etwa 150 μm ist.

19. Verfahren nach Anspruch 13, bei dem die Kombination außerdem ein die Faserbildung förderndes Substrat enthält.

20. Verfahren nach Anspruch 19, bei dem die mittlere Teilchengröße des die Faserbildung fördernden Substrats mindestens 10 mal so groß ist wie die mittlere Teilchengröße der nicht-organischen Feinteilchen.

21. Verfahren nach Anspruch 13, bei dem das Mahlen oder Scheren die nicht-organischen Feinteilchen und die organischen Polymerteilchen an Anfang vermischt, wodurch eine Aufschlämmung oder Paste gebildet wird.

22. Verfahren nach Anspruch 13, bei dem die nicht-organischen Feinteilchen und die organischen Polymerteilchen zu einer vorgemischten Aufschlämmung oder Paste kombiniert werden.

23. Verfahren nach Anspruch 13, bei dem die nicht-organischen Feinteilchen als Mahlmittel dienen.

24. Verfahren nach Anspruch 19, bei dem das die Faserbildung fördernde Substrat als Mahlmittel dient.

25. Verfahren nach Anspruch 13, bei dem das Scheren oder Mahlen in einem Mischer oder einer Mühle mit darin enthaltenen lockeren feinteiligen und hitzebeständigen Stoßmahlmedien durchgeführt wird.

26. Verfahren nach einem der Ansprüche 13 bis 25, bei dem die organischen Teilchenvorläufer aus Pulvern, Körnchen, Polymeraggregaten und -agglomeraten, Fragmenten, dickstrangigen kurzen Fasern und deren Mischungen ausgewählt sind.

27. Komprimierter organischer plus nicht-organischer Verbundkörper, der das Faserverbundmaterial nach einem der Ansprüche 1 bis 12 in komprimierter Form umfaßt.

28. Verbundkörper nach Anspruch 27, bei dem die komprimierte Form gesintert ist.

29. Faserverstärktes Material, das eine elastomere, mit dem Faserverbundmaterial nach einem der Ansprüche 1 bis 12 verstärkte Matrix enthält.

30. Poröser und dimensionsstabiler Scheider, der eine wärmeinduzierte Schmelzzwischenverbindung in einer blattartigen Form des Faserverbundmaterials nach einem der Ansprüche 1 bis 12 aufweist.

31. Diaphragmabeschichtete Kathode, die eine poröse Kathode aufweist, welche auf den kathodenaktiven Oberflächen einen porösen und dimensionsstabilen Scheider nach Anspruch 30 trägt.

32. Verfahren zur Herstellung eines hydraulisch durchlässigen dimensionsstabilen und besonders zur Verwendung in einer elektrolytischen Zelle angepaßten Scheiders auf einem Substrat, bei dem

(a) eine Aufschlämmung eines Faserverbundmaterials nach einem der Ansprüche 1 bis 12 gebildet wird, bei der die Polymerkomponente mechanisch und chemisch widerstandsfähig gegenüber der Zellumgebung ist und die anorganische Komponente chemisch widerstandsfähig gegenüber der Zellumgebung ist,

(b) mit Hilfe eines Druckdifferentials die Aufschlämmung als eine einheitliche Mischung der anorganischen/Polymer-Verbundfasern auf einem Substrat abgeschieden wird,

(c) die Abscheidung einer ausreichenden Temperatur ausreichend lange ausgesetzt wird, um den Verbundfasern zu gestatten zusammenzuschmelzen, wodurch eine mechanisch stabile durchlässige Matte gebildet wird, und

(d) die permeable Matte auf im wesentlichen Raumtemperatur abgekühlt wird, wodurch ein Scheider erhalten wird, der unter Zellbetriebsbedingungen dimensionsstabil ist.

33. Verfahren nach Anspruch 32, bei dem in Stufe (b) auf einem porösen Substrat ausgewählt aus einem Sieb, einer Rückwand, einer perforierten Platte oder einer Kathode abgeschieden wird.

34. Verfahren nach Anspruch 32, bei dem in Stufe (b) eine poröse Kathode in die Aufschlämmung eingebracht und eine einheitliche Mischung des Faserverbundmaterials mit Hilfe eines Druckdifferentials darauf abgeschieden wird.

35. Verfahren nach Anspruch 32, bei dem in Stufe (a) ein Mischmaterial der Verbundfasern, welches 0 bis 70 Gewichtsprozent von restlichem, die Faserbildung fördernden Substrat enthält, zu Wasser

17

zugegeben wird, wobei das Mischmaterial in einer Menge von 5 bis 600 g pro Liter Wasser zugegeben wird.

36. Verfahren nach Anspruch 32, bei dem in Stufe (b) mit 0 mm Vakuum begonnen, 5 bis 30 Minuten lang auf 350 bis 650 mm Vakuum erhöht und anschließend 5 bis 30 Minuten lang dieses erhöhte Vakuum aufrechterhalten wird.

37. Verfahren nach Anspruch 32, bei dem Stufe (c) eine erste Trocknungstemperatur von 70 bis 130°C für etwa 0,5 bis 3,0 Stunden und eine zweite Polymerschmelztemperatur von 300 bis 390°C für etwa 0,25 bis 3 Stunden umfaßt.

38. Verfahren nach Anspruch 32, bei dem das Faserverbundmaterial der Aufschlämmung von Stufe (a) eine Polymerkomponente aufweist, die 5 bis 70 Gewichtsprozent der gesamten Verbundfaser ausmacht, und die Konzentration der Verbundfasern in der Aufschlämmung im Bereich von 50 bis 300 g pro Liter liegt.

39. Verfahren nach Anspruch 32, bei dem die Aufschlämmung von Stufe (a) 0,5 bis 2,5 g Verdickungsmittel pro Liter Aufschlämmung enthält.

40. Verfahren nach Anspruch 32, bei dem die Aufschlämmung von Stufe (a) mit Polymerfasern gebildet wird, die aus Polymerkörnchen mit einer Teilchengröße im Bereich von 0,05 bis 200 Mikrometer und aus Polyvinylfluorid, Polyvinylidenfluorid, Polytetrafluorethylen, Polychlortrifluorethylen, Polyperfluorethylenpropylen, dem Copolymer aus Ethylen und Chlortrifluorethylen, Polyfluoralkoxyethylenpolymeren und deren Mischungen hergestellt sind.

41. Verfahren nach Anspruch 32, bei dem die Behandlung von Stufe (c) für das Polymer der Fasern ausreichend ist, um zu erweichen, aber nicht ausreicht, um zu einer wesentlichen Zersetzung des Polymer zu führen.

42. Verfahren nach Anspruch 32, bei dem die Aufschlämmung von Stufe (a) eine Menge von die Faserbildung förderndem Substrat enthält.

43. Verfahren nach Anspruch 42, bei dem die Aufschlämmung von Stufe (a) ein festes, körniges, inertes die Faserbildung förderndes Substrat enthält, welches NaCl, $CaZrO_2$, Aluminiumoxid, Kalkstein, Sand, Graphit oder deren Mischungen umfaßt, und das die Faserbildung fördernde Substrat in einer Menge von etwa 10 bis 1000 Gewichtsprozent bezogen auf das Gewicht der Verbundfaser vorhanden ist.

44. Verfahren nach Anspruch 32, bei dem in Stufe (a) das Faserverbundmaterial mit basenfreiem Wasser gemischt wird.

45. Verfahren nach Anspruch 32, bei dem in Stufe (a) das Faserverbundmaterial mit 0,05 bis etwa 0,5 Gew.% Base enthaltendem Wasser gemischt wird.

46. Verfahren nach Anspruch 32, bei dem in Stufe (a) das Faserverbundmaterial mit Wasser gemischt wird, welches mehr als 30 Gew.% Base bis zur Sättigungsmenge an Base enthält.

47. Mischung, die speziell zur Abscheidung eines dimensions-stabilen Scheiders auf einem Substrat angepaßt ist, wobei die Mischung ein flüssiges, ein Faserverbundmaterial nach einem der Ansprüche 1 bis 12 enthaltendes Medium enthält.

48. Mischung nach Anspruch 47, bei der das flüssige Medium etwa 0,05 bis etwa 0,5 Gew.% Base enthält.

49. Mischung nach Anspruch 47, bei der das flüssige Medium mehr als 30 Gew.% Base bis zur Sättigungsmenge an Base enthält.

50. Zelle, die eine Anode und eine Kathode mit einem dazwischenliegenden dimensionsstabilen Scheider in Form einer Matte des Faserverbundmaterials nach einem der Ansprüche 1 bis 12 aufweist.

51. Verwendung des Scheiders nach Anspruch 30 zur Herstellung von Chlor und Alkalihydroxid in einer Chlor-Alkali-Zelle.

## Revendications

1. Composite fibreux comprenant des fibres d'un polymère organique présentant une matière particulaire réfractaire, non organique, finement divisée, liée fermement avec ledit polymère au moins de façon importante à l'intérieur de la surface de celui-ci de façon à être résistante à la séparation physique des fibres sans destruction des fibres, caractérisé en ce que les fibres sont des fibres non isotropes fibrillées présentant une morphologie non uniforme, au moins une partie des fibres étant ramifiée.

2. Composite fibreux selon la revendication 1, dans lequel lesdites matières particulaires non organiques sont en partie encapsulées dans ladite fibre de polymère et en partie encastrées dans la surface desdites fibres polymères.

3. Composite fibreux selon la revendication 1, dans lequel lesdites fibres polymères organiques présentent des diamètres dans la gamme d'environ 1 micron à environ 1000 microns.

4. Composite fibreux selon la revendication 1, dans lequel une portion en poids majeure desdites matières particulaires non organiques est plus fine qu'environ 150 microns.

5. Composite fibreux selon la revendication 1, dans lequel lesdites matières particulaires non organiques comprennent des substituants très finement divisées choisis parmi les oxydes métalliques, les carbures métalliques, les borures métalliques, les siliciures métalliques, les sulfures métalliques, les nitrures métalliques, les silicates, les aluminates, les céramiques, les cermets, le carbone, les métaux, les alliages ou leurs mélanges.

6. Composite fibreux selon la revendication 5, dans lequel lesdites matières particulaires non organiques sont choisies parmi les oxydes de métaux de transition et leur mélange.

7. Composite fibreux selon la revendication 1, dans lequel ledit polymère comprend au moins un polymère contenant de l'halogène qui comprend du fluor.

8. Composite fibreux selon la revendication 1, dans lequel la longueur du tronc principal des fibres ramifiées est dans la gamme de 1 micron à environ 30000 microns et le rapport longueur/diamètre pour ledit composite fibreux est supérieur à 2/1.

9. Composite fibreux selon la revendication 1, comprenant en outre un substrat induisant des fibres.

10. Composite fibreux selon la revendication 9, dans lequel le substrat induisant des fibres est une matière inerte, pulvérulente, solide.

11. Composite fibreux selon la revendication 10, dans lequel le substrat induisant des fibres est choisi parmi le sel, $CaZrO_3$, alumine, le calcaire, le sable, le graphite, ou leurs mélanges.

12. Composite fibreux selon la revendication 1, dans lequel ledit composite est une matière particulaire coulant librement et d'une sécheresse floconneuse, blanc sale, de texture molle comprenant de la zircone très finement divisée liée fermement à l'intérieur de la surface d'une fibre polymère organique contenant de l'halogène.

13. Procédé pour fabriquer le composite fibreux selon l'une quelconque des revendications précédentes, comprenant:

(1) la combinaison desdites matières particulaires non organiques et de particules de précurseur organique pour ledit polymère;

(2) le fait d'amener la combinaison des matières particulaires et des particules à une température élevée suffisante pour que ledit polymère organique se ramollisse et s'écoule sous pression mais insuffisante pour avoir une décomposition importante dudit polymère; et

(3) le broyage ou le cisaillement vigoureux de ladite combinaison à ladite température élevée pendant une durée suffisante pour permettre aux particules de précurseur organique ramolli de s'écouler sous la pression de broyage ou de cisaillement et de fibriller en présence desdites matières particulaires, liant ainsi fermement lesdites matières particulaires avec ledit polymère ramolli pendant la formation des fibres.

14. Procédé selon la revendication 13, dans lequel ladite combinaison comprend en outre un milieu liquide.

15. Procédé selon la revendication 14, dans lequel on combine de 1 à 90% en poids de polymère et un complément constitué de matières particulaires non organiques, à l'exclusion de tout milieu liquide.

16. Procédé selon la revendication 14, dans lequel ledit procédé comprend en outre la ventilation alors que ladite combinaison est amenée à ladite température élevée pour permettre aux matières volatiles de s'échapper de la combinaison.

17. Procédé selon la revendication 13, dans lequel ladite température élevée est maintenue dans la gamme d'environ 50°C à environ 200°C pendant une durée pouvant aller jusqu'à environ 2 heures.

18. Procédé selon la revendication 13, dans lequel on combine des particules de polymère comprenant des granules présentant une taille dans la gamme d'environ 0,05 à environ 200 microns, ensemble avec des matières particulaires non organiques présentant une taille telle que la majeure proportion en poids soit plus fine qu'environ 150 microns.

19. Procédé selon la revendication 13, dans lequel ladite combinaison comprend en outre un substrat induisant des fibres.

20. Procédé selon la revendication 19, dans lequel ledit substrat induisant des fibres présente une taille moyenne des particules d'au moins dix fois supérieure à la taille moyenne des particules desdites matières particulaires non organiques.

21. Procédé selon la revendication 13, dans lequel ledit broyage ou cisaillement mélange initialement lesdites matières particulaires non organiques et lesdites particules de polymère organique, créant ainsi une bouillie ou suspension, ou pâte.

22. Procédé selon la revendication 13, dans lequel lesdites matières particularies non organiques et lesdites particules de polymère organique sont combinées en une bouillie ou suspension, ou pâte prémélangée.

23. Procédé selon la revendication 13, dans lequel lesdites matières particulaires non organiques servent d'agent de broyage.

24. Procédé selon la revendication 19, dans lequel ledit substrat induisant des fibres sert d'agent de broyage.

25. Procédé selon la revendication 13, dans lequel ledit cisaillement ou broyage a lieu dans un mélangeur ou broyeur présentant un milieu de broyage par percussion particulaire et réfractaire, délié, inclus dedans.

26. Procédé selon l'une quelconque des revendications 13—25, dans lequel les précurseurs particulaires organiques sont choisis parmi les poudres, les granules, les agrégats et agglomérats de polymère, les fragments, les fibres morcelées et leurs mélanges.

27. Corps composite de matière organique plus matière non organique compressé comprenant, sous forme compressée, le composite fibreux selon l'une quelconque des revendications 1—12.

28. Corps composite selon la revendication 27, dans lequel ladite forme compressée est frittée.

29. Matériau fibreux renforcé comprenant une matrice élastomère renforcée avec le composite fibreux selon l'une quelconque des revendications 1—12.

30. Séparateur poreux et dimensionnellement stable comprenant une interconnection fusionnée

induite par la chaleur, sous une forme ayant l'apparence d'une feuille, d'un composite fibreux selon l'une quelconque des revendications 1—12.

31. Cathode revêtue d'un diaphragme comprenant une cathode foramineuse portant, sur ses surfaces cathodiquement actives, un séparateur poreux et dimensionellement stable selon la revendication 30.

32. Procédé pour produire un séparateur dimensionnellement stable, hydrauliquement perméable, sur un substrat, ledit séparateur étant particulièrement adapté pour l'utilisation dans une cellule électrolytique, lequel procédé comprend:

(a) la formation d'une suspension ou bouillie d'un composite fibreux selon l'une quelconque des revendications 1—12, dans lequel le composant polymère est mécaniquement et chimiquement résistant à l'environnement de la cellule et le composant non organique est chimiquement résistant à l'environnement de la cellule;

(b) le dépôt, au moyen d'un différentiel de pression, de ladite bouillie ou suspension sous forme de mélange uniforme desdites fibres de composites de matière non organique/polymère sur un substrat;

(c) le fait de soumettre le dépôt à une température suffisante et pendant une durée suffisante pour permettre aux fibres composites de fusionner ensemble, formant ainsi une natte perméable, mécaniquement stable; et

(d) le refroidissement de ladite natte perméable jusqu'à pratiquement la température ambiante, obtenant ainsi un séparateur dimensionnellement stable dans les conditions de travail de la cellule.

33. Procédé selon la revendication 32, dans lequel l'étape (b) comprend le dépôt sur un substrat poreux choisi parmi un tamis ou grille, une matière de support, une plaque perforée ou une cathode.

34. Procédé selon la revendication 32, dans lequel l'étape (b) comprend l'insertion d'une cathode foramineuse dans ladite bouillie ou suspension et le dépôt dessus d'un mélange uniforme dudit composite fibreux au moyen d'un différentiel de pression.

35. Procédé selon la revendication 32, dans lequel l'étape (a) comprend l'addition à de l'eau d'un matériau mixte desdites fibres composites contenant 0—70% en poids de substrat induisant des fibres, résiduel, ledit matériau mixte étant ajouté en une quantité de 5—600 grammes par litre d'eau.

36. Procédé selon la revendication 32, dans lequel l'étape (b) comprend le départ avec un vide de 0 mm et en augmentant jusqu'à un vide de 350—650 mm pendant 5—30 minutes, en maintenant ensuite un vide aussi élevé de 5—30 minutes.

37. Procédé selon la revendication 32, dans lequel l'étape (c) comprend une première température de séchage de 70—130°C pendant environ 0,5—3,0 heures et une seconde température de fusion du polymère de 300—390°C pendant environ 0,25—3 heures.

38. Procédé selon la revendication 32, dans lequel le composite fibreux de la bouillie ou suspension de l'étape (a) présente un composant polymère comprenant de 5 à 70% en poids du total des fibres composites et la concentration des fibres composites dans la bouillie ou suspension est dans la gamme de 50 à 300 grammes par litre.

39. Procédé selon la revendication 32, dans lequel la suspension ou bouillie de l'étape (a) contient 0,5—2,5 grammes d'agent épaississant par litre de bouillie ou suspension.

40. Procédé selon la revendication 32, dans lequel la bouillie ou suspension de l'étape (a) est formée de fibres polymères préparées à partir de granules de polymère ayant une taille des particules dans la gamme de 0,05 à 200 microns et constitués de fluorure de polyvinyle, de fluorure de polyvinylidène, de polytétra-fluoroéthylène, de polychlorotrifluoroéthylène, de polyperfluoroéthylène propylène, du copolymère de l'éthylène et du chlorotrifluoroéthylène, de polymères de polyfluoroalcoxyéthylène et de mélanges de ceux-ci.

41. Procédé selon la revendication 32, dans lequel le traitement de l'étape (c) est suffisant pour que le polymère des fibres se ramollissent mais insuffisant pour conduire à tout décomposition significative du polymère.

42. Procédé selon la revendication 32, dans lequel la suspension ou bouillie de l'étape (a) comprend une quantité de substrat induisant des fibres.

43. Procédé selon la revendication 42, dans lequel la suspension ou bouillie de l'étape (a) comprend un substrat induisant des fibres inerte, granulaire, solide comprenant NaCl, CaZrO₃, de l'alumine, du calcaire, du sable, du graphite ou leurs mélanges, et le substrat induisant des fibres est présent en une quantité d'environ 10 à 1000% en poids par rapport au poids de la fibre composite.

44. Procédé selon la revendication 32, dans lequel l'étape (a) comprend le mélange dudit composite fibreux avec de l'eau ne contenant par de base.

45. Procédé selon la revendication 32, dans lequel l'étape (a) comprend le mélange dudit composite fibreux avec de l'eau contenant de 0,05 à environ 0,5% en poids de base.

46. Procédé selon la revendication 32, dans lequel l'étape (a) comprend le mélange dudit composite fibreux avec de l'eau contenant de plus de 30% en poids de base jusqu'à saturation en ladite base.

47. Mélange particulièrement adapté au dépôt d'un séparateur dimensionellement stable sur un substrat, lequel mélange comprend un milieu liquide contenant un composite fibreux selon l'une quelconque des revendications 1—12.

48. Mélange selon la revendication 47, dans lequel ledit milieu liquide contient d'environ 0,05 à environ 0,5% en poids de base.

49. Mélange selon la revendication 47, dans lequel ledit milieu liquide contient de plus de 30% en poids de base jusqu'à saturation en ladite base.

50. Cellule comprenant une anode et une cathode ayant entre elles un séparateur dimensionnellement stable sous forme matée du composite fibreux selon l'une quelconque des revendications 1—12.

51. Utilisation du séparateur selon la revendication 30, pour la production de chlore et de caustique dans une cellule pour chlore-alcali.